Europäisches Patentamt

European Patent Office

Office européen des brevets

(11) Publication number: 0 504 375 A1

## EUROPEAN PATENT APPLICATION
## published in accordance with Art. 158(3) EPC

(21) Application number: 91918742.7

(22) Date of filing: 16.10.91

(86) International application number: PCT/ES91/00065

(87) International publication number: WO 92/06831 (30.04.92 92/10)

(51) Int. Cl.5: B27G 21/00

(30) Priority: 17.10.90 ES 9002948

(43) Date of publication of application: 23.09.92 Bulletin 92/39

(84) Designated Contracting States: AT BE CH DE DK ES FR GB GR IT LI LU NL SE

(71) Applicant: PEDROS BATTLE, Agustin
c/Domenec Cardenal, 23
E-25332 La Fuliola(ES)
Applicant: BELLOSTES BACH, Maria del Carmen
c/Domenec Cardenal, 23
E-25332 La Fuliola(ES)

(72) Inventor: PEDROS BATTLE, Agustin
c/Domenec Cardenal, 23
E-25332 La Fuliola(ES)
Inventor: BELLOSTES BACH, Maria del Carmen
c/Domenec Cardenal, 23
E-25332 La Fuliola(ES)

(74) Representative: Carpintero Lopez, Francisco
HERRERO & ASOCIADOS, S.L. Alcalá, 21
E-28014 Madrid(ES)

(54) VARIABLE GEOMETRY PROTECTOR DEVICE FOR WOOD FORMING MACHINES.

(57) The device is provided to be applied to wood forming machines, called "shapers" or millers, machines which perform the milling of regular or irregular profiles of wood parts. The protector is mounted as a whole on a pair of vertical columns (14) previously fixed to the corresponding working table or platform of the machine, the device being comprised of a pair of rings (1) mounted rotationally between two parts (2 and 3) forming an assembly or headstock which is fixed to said columns (14) by means of a pair of parts (10 and 11) slidingly mounted on two emerging bars (9) integral with the headstock, said parts (10 and 11) being complemented with other parts (12 and 16) which, by means of fixing and regulating screws, allow to displace the headstock assembly with respect to the milling cutter, in order to regulate the bite depth of the milling cutter. The rings (1) which are provided with tangential arms (6) having at the ends thereof cylindrical stops or rollers (7) appropriately positioned by the machine operator ensure a smooth and safe admission of the wood part for the operation of the milling cutter.

## OBJECT OF THE INVENTION

The invention relates to a device provided to be applied to wood forming machines, such device being a variable geometry protector in order for the operator not to risk accidents in using the working implement, namely the machine or miller.

## BACKGROUND OF THE INVENTION

A wood forming machine designated a "SHAPER" exists which comprises what is known as a miller and which includes a working table or platform from which emerges a shaft coupled to a motor located under the table, and to which the respective milling cutter is coupled.

Now then, depending on the kind of milling required and given that operation can be carried out upon the lower edge, on the upper edge, on the middle area, at different heights and that the part or plank can even have different thicknesses, again depending upon the kind of milling required, the implement or milling cutter as such shall have to be mounted so that it may travel upwards and downwards in order to operate at the appropriate height, while on the other hand the milling cutter must be replaceable in order for the desired profile or shape to be obtained in all cases.

Therefore, the milling cutter in the said shapers or millers can be higher or lower and can have a larger or smaller diameter. In any event, the plank or part being worked must be drawn towards the milling cutter by hand, thus risking an accident.

Furthermore, the part or plank to be drawn towards the milling cutter in order to be shaped must be so delivered without any assistance, which renders this extremely difficult unless one is an expert.

## DESCRIPTION OF THE INVENTION

The device subject of the invention has been designed to fully solve the above problems, acting not only as a protector for the user's hands when handling the parts or planks placed opposite the implement or operating milling cutter, but is moreover provided such that it may be established at a higher or lower position, depending upon the diameter of the milling cutter and the operation required.

Another essential feature of the invention is that the protector includes means that define bearings to guide the part or plank to be worked, such bearings being suitably positioned to allow the part to be moved in a straight line, when the edge to be worked is straight, or moved arcuately when the edge to work is arcuate.

More specifically, the protector of the invention comprises a pair of rings mounted between a pair of parts interconnected by means of through screws, both parts being provided with an opening of a length equal to the diameter of the rings, the latter having tangential arms with a kind of fixed roller at their ends which stands as the bearing for guidance of the part that is to be worked. The rings are mounted between both parts such that the same can turn in either direction, in order thereby to place the device in an appropriate position so that access to the working area is tangential, adaptable to any curve, thereby providing a smooth and gradual approach to the milling and truing of moulds, wainscots and so forth, fully eliminating the risk involved in reaching the milling cutter by hand, as is usually the case, and the cause of a large number of accidents.

The device is further provided with a pair of parallel bars one of whose ends is integral with one of the end parts of the fixed body of the two parts making up what could be said to be the headstock, together with the rotatory rings, and in particular between the said two bars parts are mounted that on the one hand allow the assembly to mounted upon vertical columns fixed to the machine's general working table or platform and on the other, relying upon a number of controls embodied by manually driven screws, allow the adjustment of both the working height, according to the thickness of the milling cutter or part to be worked, and the milling depth of the cutter, which latter adjustment can be effected either manually or micrometrically.

The protector as a whole can be further provided with a transparent methacrylate cover that enhances protection efficiency, such cover to be preferably used with the milling cutter placed above the protector device, such that being transparent, the operator shall lose no visibility, this cover also being provided to have an adjustable depth and height.

## DESCRIPTION OF THE DRAWINGS

In order to provide a fuller description and contribute to the complete understanding of the characteristics of this invention, a single sheet of drawings is attached to the specification which, while purely illustrative and not fully comprehensive, shows an exploded perspective view of the protector device subject of the invention, where the essential components of all the parts thereof can be observed.

## PREFERRED EMBODIMENT OF THE INVENTION

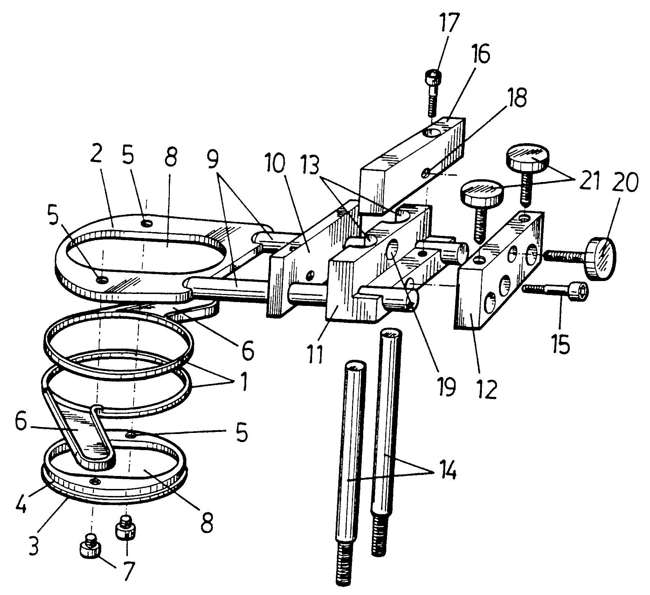

The above figure shows that the device subject hereof comprises a pair of like rings (1) arranged on top of each other between a pair of parts (2) and (3), the latter providing a stepping (4) defining a seating for the said rings (1), both parts (2) and (3) being fixed to each other by means of screws that cross through facing holes (5), which attachment allows the rings (1) to turn independently, the latter having a tangential arm (6) the lower face of which, as shown in the figure, is mounted with two roller-type pins (7) acting as bearings for the aforesaid function.

Parts (2) and (3) are both provided with a window (8) for the passage of the relevant milling cutter acting as the working implement of the milling machine or shaper.

Two parallel bars (9) project from the part (2), which can be deemed fixed, upon which bars are slidingly mounted parts (10), (11) and (12) in this order, from the innermost part of the bars (9) towards the free end thereof. The middle part (11) with a square profile, is provided with vertical through holes, opening towards the outer face, which holes are numbered (13), provided to mount the assembly upon the relevant vertical columns (14) that are fixed upon the working table or platform structure as such, the above so that the establishment upon the bars (14) is effected by applying the part (10) against the part (11) by means of a screw (15) that passes through a hole in part (13), though without being screwed therein, but merely passing through parts (11) and (10) being screwed in the latter in order for one to be pressed against the other and hence for fixing on the columns (14) to be effected.

A fourth part (16) is placed upon the dihedral defined by the square profile of part (11) with a vertical hole in which a screw (17) is mounted to block and fix the structure once the same is placed in the user's selected position, the said part (16) also having a transverse and through hole (18) that faces hole (19) in part (11) for the passage of the adjustment screw (20) to allow, with the screws (21), the displacement of both part (12) and parts (10), (11) and (16) as a whole. With this layout and structure of the said elements, the working height, in accordance with the thickness of the milling cutter or the wood, is adjusted by sliding the assembly through the vertical columns (14), fixing being achieved by means of screw (15) passing through parts (11) and (10), being screwed to the latter to tighten, as aforesaid, the columns (12) and thus for the assembly to be fixed.

Furthermore, the bite depth of the milling cutter, in addition to being manually adjustable, can be adjusted micrometrically by acting upon the adjustment screw (20) that can adjust the working depth to the millimeter, after previously tightening screws (21) vertically disposed in holes provided to such end in part (12), which screws (21) fix the said part (12) upon the bars (9). Once the required position has been determined, the assembly must be locked by means of the aforesaid screw (17).

As to the arms (6) in the rotary rings (1), the said turning movement of the said rings and the orientation of the said arms (6), with the cylindrical end bodies (7), allow any radius or straight line to be adapted to, simply by adjusting the said arms (6) with their stops (7) to the profile that is to be worked. The said stops or rollers (7) can be mounted on either side of the actual arms (6).

In other words, by means of the said rings or loops (1) and of course relying upon the stops or rollers (7), bearings are provided for guidance of the part to be worked, which bearings are duly positioned by the operator to allow both straight-line displacements of the part when the edge to be worked is straight, and arcuate displacements when the said edges are arcuate.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1. A variable geometry protector device for wood forming machines, provided to be mounted upon a pair of columns (14) previously fixed to the working table or platform in the actual machine, essentially characterised in comprising a pair of superposed rings (1), mounted rotationally between two parts (2) and (3), the latter having an annular stepping (4) for the said rings (1) to be positioned, these latter having a tangential arm (6) upon either face of which can be mounted a roller-type stop (7) making up a bearing for the profile of the part to be worked; and further, parts (2) and (3) between which the rings (1) are mounted are provided with an opening (8) for the passage of the working implement, and in particular part (2) has a pair of parallel external bars (8) wherein are correlatively mounted sliding parts (10), (11) and (12) such that between the first two the attachment of the assembly on the bearing columns (14) is determined, while part (12), together with the other part (16) linked to part (11) allows the working depth to be adjusted by means of a manually driven screw (20).

2. A variable geometry protector device for wood forming machines, as in claim 1, characterised in that parts (10) and (11) with which the assembly is attached to the vertical columns (14) are fixed to each other through a transverse screw (15) while the attachment between part (11) and part (16) is effected by means of a locking screw (17) in the final working position, whereas part (12) is set on the actual bearing bars (9) thereof by means of vertical screws (21).

# INTERNATIONAL SEARCH REPORT

International Application No PCT/ES91/00065

| I. CLASSIFICATION OF SUBJECT MATTER (if several classification symbols apply, indicate all) [6] |
|---|

According to International Patent Classification (IPC) or to both National Classification and IPC

Int. Cl.$^5$ : B27G 21/00

| II. FIELDS SEARCHED |
|---|

### Minimum Documentation Searched [7]

| Classification System | Classification Symbols |
|---|---|
| Int. Cl.$^5$ | B27G, B23Q, F16P, B27C |

Documentation Searched other than Minimum Documentation
to the Extent that such Documents are Included in the Fields Searched [8]

| III. DOCUMENTS CONSIDERED TO BE RELEVANT [9] | | |
|---|---|---|
| Category [*] | Citation of Document, [11] with indication, where appropriate, of the relevant passages [12] | Relevant to Claim No. [13] |
| A | WO, A, 8606667 (DEDRY) 20 November 1986, see page 2, line 20 - page 3, line 19; claims 1,2; figure 1 --- | 1,2 |
| A | US, A, 1715292 (HOFFMAN et al.) 28 May 1929, see page 1, line 64 - page 2, line 35; figures 1-3 --- | 1,2 |
| A | GB, A, 330681 (NEALE) 19 June 1930, see page 1, lines 10-13,49-54; page 2, lines 15-24; claims 1,2; figures 1,2 --- | 1 |
| A | US, A, 3376787 (MORGANSON) 9 April 1968, see column 1, lines 32-37; column 2, line 2 - column 3, line 9, figures 1-3 --- | 1 |
| A | EP, A, 0281998 (HIRSCH) 14 September 1988, see abstract; figuras 1,2 ------- | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

| IV. CERTIFICATION | |
|---|---|
| Date of the Actual Completion of the International Search | Date of Mailing of this International Search Report |
| 15 January 1992 (15.01.92) | 21 February 1992 (21.02.92) |
| International Searching Authority | Signature of Authorized Officer |
| | |

Form PCT/ISA/210 (second sheet) (January 1985)